# EUROPEAN PATENT SPECIFICATION

(11) **EP 1 503 058 B1**
(45) Date of publication and mention of the grant of the patent: **20.06.2007**
(21) Application number: 03102368.2
(22) Date of filing: 30.07.2003
(51) Int. Cl.: F02B 37/04, F02D 41/00, F02D 41/10

(54) **Boost pressure control for an internal combustion engine**
Ladedruckregelung für einen Verbrennungsmotor
Contrôle d'un système de suralimentation d'un moteur à combustion

(43) Date of publication of application: 02.02.2005
(73) Proprietor: Ford Global Technologies, LLC, A subsidary of Ford Motor Company, Dearborn, MI 48126 (US)
(72) Inventor: Moraal, Paul Eduard, 6291 VP, Vaals (NL); Petrovic, Simon, 52072, Aachen (DE)
(74) Representative: Drömer, Hans-Carsten

(56) References cited:
- DE-A- 10 145 038
- DE-A- 10 302 453
- US-A- 5 408 979

## Description

The present invention relates to a boost pressure control device for a combustion engine equipped with a boosting device and an auxiliary boosting device, as well as to a combustion engine equipped with a boosting device and an auxiliary boosting device. The present invention further relates to a method of controlling the boost pressure in a combustion engine equipped with a boosting device and an auxiliary boosting device.

Combustion engines equipped with a boosting device, such as turbocharged diesel engines, suffer from an important performance deficiency, namely the so called "turbo lag". The term "turbo lag" describes the effect that, upon acceleration demand, the engine needs some time to deliver full torque and, as a consequence, the actual acceleration lags behind the driver's demand. This delay is caused by the fact that the additional fuel required during the acceleration can only be burned satisfactory if a sufficient amount of air, i.e. sufficient boost pressure, is present. The boost pressure needs to be provided by the turbocharger which in turn draws its power from the exhaust gas energy. The exhaust gas energy, however, depends on the engine's performance which in turn depends on the boost pressure. This circular dependence of fueling rate, exhaust gas energy and available boost pressure means in practice that the increase in fueling rate is limited by the rate of boost pressure increase in order to ensure smoke free combustion in transient operation of the engine. This limiting in fueling rate is perceivable by the driver.

A partial improvement has already been achieved by the introduction of variable geometry turbocharging which allows, to some extent, the characteristics of the turbocharger to be adapted to the actual operating condition. A further improvement is expected from the introduction of auxiliary boosting devices such as electrically driven compressors, mechanically driven compressors or electrically assisted turbochargers. For example, a turbocharger comprising a motor to drive the compressor of the turbocharger at low exhaust gas flow is disclosed in US 5,560,208. In the following, such auxiliary boosting devices are, without loss of generality, referred to as electronic booster or e-booster.

US 5,408,979 discloses a device regulation of turbo-charging in an internal combustion engine. The engine comprises a first turbo unit being provided with a first valve responsive to a first signal, a second turbo unit provided with a second valve responsive to a second signal, and an engine rotational speed sensor issuing a third signal, at least one pressure sensor issuing a forth signal, and a central control unit. The central control unit is arranged to control the actuation of the first and second valves in response to signals from the engine rotational speed sensor and the pressure sensor to provide a continuous transition between operation of the first and second units.

For diesel engines equipped with a variable geometry turbocharger, VGT, the boost pressure is controlled by varying of the geometry of the VGT, e.g. by variable nozzle vanes ahead of the turbocharger's turbine wheel and/or variable diffuser vanes in the turbochargers compressor component. However, when an e-booster is added, the interaction between the means for varying the geometry and the e-booster may negatively impact the performance of the system. In particular, when the e-booster is activated, the VGT would tend to open the vanes and let the e-booster take care of the intake pressure build-up since the e-booster has a faster response time than the VGT. However, because the e-booster draws a significant amount of power from the vehicle's electrical system, its operation will usually be restricted to a few seconds. When the e-booster is switched off and the VGT has not reacted accordingly, the boost pressure will drop, which in turn could lead to a torque reduction (i.e. drivability impact), or excessive smoke production.

It is therefore an object of the present invention to provide an improved boost pressure control device for a combustion engine equipped with a boosting device and an auxiliary boosting device.

It is another object of the present invention to provide an improved combustion engine equipped with a boosting device and an auxiliary boosting device.

It is still another object of the present invention to provide an improved method of controlling a combustion engine equipped with a boosting device and an auxiliary boosting device.

The first object is solved by a boost pressure control device according to claim 1, the second object is solved by a combustion engine according to claim 7, and the third object is solved by a method of controlling the boost pressure in a combustion engine according to claim 8. The dependent claims define further developments of the invention.

An inventive boost pressure control device for a combustion engine equipped with a boosting device responsive to a boost pressure control signal and an auxiliary boosting device responsive to an auxiliary boosting signal comprises a controller for controlling the boost pressure of the combustion engine by outputting the boost pressure control signal to the boosting device in response to an input signal input into the controller. The input signal is based on a deviation of an output signal of the combustion engine representing a measure for the boost pressure in the combustion engine, from a reference signal representing a setpoint to be reached by the output signal. By boost pressure control signal each signal is meant which is suitable for directly or indirectly controlling the boost pressure of a combustion engine, e.g. by controlling the position of the vanes of a VGT. The inventive boost pressure control device further comprises an introduction unit for introducing a modification into the input signal by use of a modification signal based on the auxiliary boosting signal, so as to generate an input signal that represents a non-zero deviation as long as the auxiliary boosting device is active. The boosting device is implemented as a VGT. Then, the boost pressure control signal is designed to influence the geometry of the VGT.

The inventive boost pressure control device is based on the following findings:

In standard praxis of controlling the boost pressure in a VGT equipped engine, a proportional-integral-derivative controller (PID-controller) is driven by the error or deviation between the demanded manifold absolute pressure and actual manifold absolute pressure. In many applications, the basic PID-controller is refined by making both, the setpoint as well as the gains of the controller, dependent on the engine operating conditions and ambient conditions. Also, various limits on control authority and actuator output can be imposed. However, for the arguments presented here and without loss of generality, standard practice can be represented by a simple PID-controller.

By using the e-booster, the MAP setpoint will be reached more quickly than without using it and the e-booster will provide a substantial contribution to the resulting boost pressure. The vanes of the VGT will not close far enough to maintain this boost pressure by itself, and, since the error signal will be zero when the target boost pressure is achieved, the vanes will not close any further. As a result, when the e-booster is switched off, the boost pressure will drop suddenly.

In the inventive boost pressure control device, the vanes will be caused to close further by providing the standard controller with an augmenting term, i.e. the modification signal, which accounts for the contribution of the auxiliary boosting device. The effect of the augmenting term is that as long as the e-booster is active, the VGT will be caused to close further, even if the MAP has already reached the MAP setpoint. As a consequence, the VGT gradually takes over the control authority from the e-booster. Thus, a torque reduction or excessive smoke production, when the e-booster is switched off can be avoided, or at least reduced.

In a first arrangement, the introduction unit is implemented as an adder for adding the modification signal to a deviation signal representing the deviation of the output signal from the reference signal, so as to generate a modified deviation signal as the input signal.

In a second arrangement, the introduction unit is implemented as an adder for adding the modification signal to the reference signal, so as to generate a modified reference signal.

In a third arrangement, the introduction unit is implemented as a subtracter for subtracting the modification signal from the output signal, so as to generate a modified output signal.

As can be seen from the foregoing, the introduction of the modification signal may take place at different points of the boost pressure control device so that the inventive boost pressure control can be easily adapted to various control layouts.

In a development of the invention, the boost pressure control device comprises a look-up table which provides a number of values for the modification signal, each value being based on a different value of the auxiliary boosting signal. By this development, the modification signal may be precisely adapted to the actual type auxiliary boosting signal.

In a further development, the inventive boost pressure control device further comprises a timer for delaying the introduction of the modification signal by a certain time. For example in a VGT equipped engine, the deviation signal can be quite high at the beginning e.g. of an acceleration, so that the deviation signal alone is enough to cause the vanes of the VGT to close further. Only after a certain time has elapsed, the deviation signal tends towards zero due to the e-booster's work. If the modification signal is already available before this certain time has elapsed, the resulting pressure control signal could cause the VGT to close the vanes completely, which in turn would cause a higher exhaust gas back pressure. This would have a negative impact on the acceleration. By using the timer and delaying the modification signal until a certain time has elapsed, a complete closure of the VGT's vanes can be avoided. The delay time of the timer may be chosen depending on the engines parameters.

An inventive combustion engine, in particular a diesel combustion engine, comprises a boosting device and an auxiliary boosting device and is equipped with an inventive boost pressure control device. In the inventive combustion engine, a torque reduction or excessive smoke production, when the e-booster is switched off can be avoided, or at least reduced.

In the inventive method of controlling the boost pressure in a turbocharged combustion engine equipped with a boosting device responsive to a boost pressure control signal and an auxiliary boosting device responsive to an auxiliary boosting signal, the boost pressure control signal is calculated in response to an input signal which is based on the deviation of an output signal of the combustion engine which represents a measure of the boost pressure in the combustion engine from a reference signal which represents a setpoint to be reached by the output signal. The deviation is modified so as to derive, as the input signal, a modified deviation signal which represents a non-zero deviation as long as the auxiliary boosting device is active. The modification is based on the auxiliary boosting signal. In the inventive boost pressure control device, the boosting device is implemented as a VGT so as the boost pressure control signal is designed to influence the geometry of the VGT.

By calculating the boost pressure control signal based on the modified deviation signal the VGT will be caused to close further as long as the e-booster is active, even if the MAP has already reached the MAP setpoint. As a consequence, the VGT gradually takes over the control authority from the e-booster. Thus, a torque reduction or excessive smoke production, when the e-booster is switched off can be avoided, or at least reduced.

In the inventive method, the deviation may be modified by adding a modification signal to a deviation signal representing the deviation of the output signal from the reference signal, by adding a modification signal to the reference signal, or by subtracting a modification signal from the output signal. The various possibilities of modifying the deviation signal increases freedom in designing a control loop for implementing the inventive method.

If a non-linear dependency of the modification signal on the auxiliary boosting signal is introduced, it is possible to determine how fast the boosting device takes over the control authority from the auxiliary boosting device, by calibrating the non-linear dependency.

In a further development of the inventive method, calculating the control signal is first based on the un-modified deviation signal before, after a certain time delay, calculating the boost pressure control signal is based on the modified deviation signal. By delaying the modification of the deviation signal until a certain time has elapsed, a complete closure of the VGT's vanes can be avoided, as has been explained above. The delay time may be chosen depending on the engines parameters.

Further features, attributes and advantages of the present invention will become clear from the following description of specific embodiments of the invention in conjunction with the accompanying drawings, in which:
- Fig. 1: shows a first embodiment of the inventive boost pressure control, and
- Fig. 2: shows a second embodiment of the inventive boost pressure control.

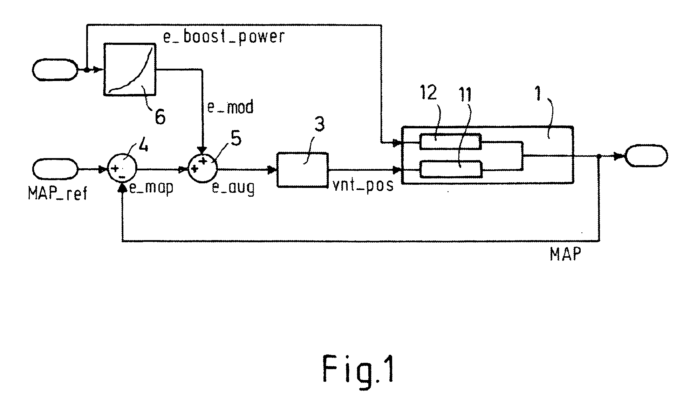

Fig. 1 shows, as a first embodiment of the invention, schematically a boost pressure control device for an engine 1 which comprises a VGT 11 as a boosting device and an e-booster 12 as an auxiliary boosting device. In the present embodiment, the VGT 11 is controlled by a closed loop control comprising a PID-controller (proportional-integral-derivative controller) 3, a subtracter 4, and an adder 5.

The subtracter 4, which receives a reference signal MAP_ref via a first input, is connected to the combustion engine 1 for receiving an output signal MAP, which is output by the engine 1 and represents the actual manifold absolute pressure (MAP) of the combustion engine 1 as a measure of the boost pressure. The subtracter 4 is further connected to the adder 5 for outputting an error signal e_map based on the deviation of the output signal MAP from the reference signal MAP_ref, which represents a setpoint for the manifold absolute pressure to be reached by the actual manifold absolute pressure. The adder 5 is further connected to a look-up table 6 for receiving a modification signal e_mod and to the PID controller 3 for outputting a modified or augmented error signal e_aug. The PID-controller 3 is connected to the engine for outputting a position signal vnt_pos for vanes of the VGT 11 as a boost pressure control signal, which is calculated based on the augmented error signal e_aug.

To generate the error signal e_map, which defines the deviation of the output signal MAP from the reference signal MAP_ref, i.e. which represents the difference between the actual manifold absolute pressure and the setpoint manifold absolute pressure, the subtracter 4 subtracts the output signal MAP from the reference signal MAP_ref. The subtracter 4 is, in the present embodiment, implemented as an adder having a non-inverted input for receiving the reference signal MAP_ref and an inverted input for receiving the output signal MAP.

The adder 5 is used for modifying or augmenting the error signal e_map, i.e. adding the modification signal e_mod to the error signal e_map. The modification signal e_mod adds a positive term to the error signal e_map which then becomes a modified or augmented error signal e_aug which serves as the input signal of the PID-controller 3. In the PID-controller 3, the calculation of the position signal vnt_pos for vanes of the VGT 11 is then based on the augmented error signal e_aug. The described modification or augmentation is done in order to prevent the deviation of the output signal MAP from the reference signal MAP_ref to become zero as long as the e-booster 12 is active.

The modification signal e_mod is related to a signal e_boost_power which functions as an auxiliary boosting signal for controlling the e-booster 12 and represents the e-boost power. In the present embodiment, the e-boost power has exemplary been chosen as the auxiliary boosting signal to which the e-booster 12 is responsive. However, other signals like the e-boost current, voltage or the pressure ratio across the e-booster could well have been chosen. The relationship between the e-boost power and the modification signal may be chosen to be non-linear. In this case, the calibratable non-linear dependency of the modification signal from the e-boost power can be used to define how fast the VGT 11 takes over the control authority from the e-booster 12.

In the present embodiment, the relationship between the modification signal e_mod and the e-boost power is stored in the look-up table 6 which outputs a value for the modification signal in response to the current value of the e-boost power. However, the relationship could as well be defined by a function or any other calculation rule.

Although, in the present embodiment, the modification signal is added to the error signal e_map, it could as well be added to the reference signal MAP_ref or subtracted from the output signal MAP by using an appropriate adder or an appropriate subtracter, respectively.

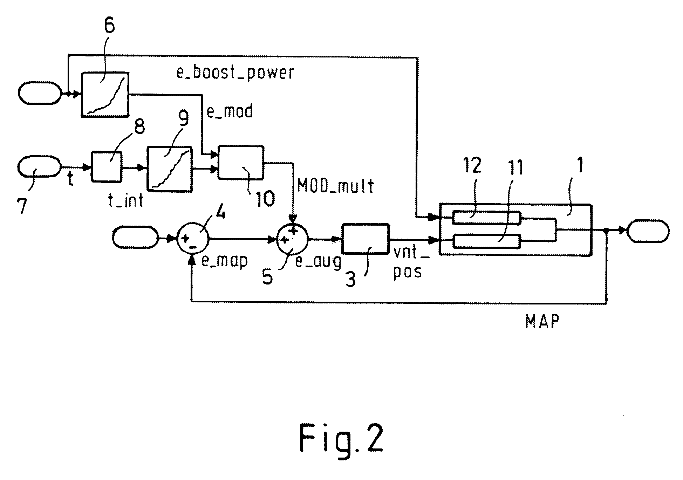

A second embodiment of the invention is schematically shown in Fig. 2. The boost pressure control device according to the second embodiment comprises, in addition to the elements of the first embodiment, a timer 7, an integrator 8, a second look-up table 9 and a multiplier 10 in addition to the elements of the first embodiment. Those elements which do not differ from the first embodiment are marked by the same reference numerals as in the first embodiment.

The integrator 8 is connected to the timer 7 for receiving a timer signal t from the timer 7 and connected to the second look-up table 9 for outputting, after integration of the timer signal t, an integrated timer signal t_int. The second look-up table 9 is, in addition, connected to a multiplier 10 which multiplies the modification signal e_mod input into the multiplier 10 by the first look-up table 6 by a multiplication signal t_mult output from the look-up table 9 as response to the integrated timer signal t_int. In difference to the first embodiment, not the modification signal e_mod is added to the error signal e_map for deriving the modified nor the augmented error signal e_aug, but the multiplied modification signal e_mod_mult.

The second embodiment has been developed for taking into account that, during acceleration, it is the intention that the e-booster 12 assists in a rapid build-up of the boost pressure. At the start of the acceleration, both, the deviation of the output signal MAP from the reference signal MAP_ref as well as the power applied to the e-booster can be quite high. As a consequence of the high power applied to the e-booster, the modification signal e_mod would be high too. In order to avoid the VGT 12 closing the vanes completely when the high error signal e_map is augmented by a high modification signal, which in turn would cause a higher gas backpressure resulting in a negative impact on the acceleration, the modification signal, i.e. the e-booster dependent contribution to the modified or augmented error signal e_aug, can, in the second embodiment, be delayed for a short calibrateable time and then phased in.

For delaying the modification signal, the timer signal t which is output from timer 7 and which would be reset at the start of acceleration, or at a time when the e-booster switches from an inactive state to active state, is fed to the integrator 8 and subsequently mapped by a nonlinear threshold function stored in the second look-up table 9 to derive a multiplication signal t_mult. The modification signal mod is then multiplied by the multiplication signal t_mult in order to derive the modification signal e_mod_mult which is then added to the error signal e_map.

## Claims

1. Boost pressure control device for a combustion engine (1) equipped with a boosting device (11) responsive to an boost pressure control signal (vnt_pos) and an auxiliary boosting device (12) responsive to an auxiliary boosting signal (e_boost_power), comprising:
a controller (3) for controlling the boost pressure of the combustion engine (1) by outputting the boost pressure control signal (vnt_pos) to the boosting device (11) in response to an input signal (e_aug) input into the controller, the input signal being based on a deviation of an output signal (MAP) of the combustion engine (1) representing a measure for the boost pressure in the combustion engine (1) from an reference signal (MAP_ref) representing a set point to be reached by the output signal (MAP);
an introduction unit (5) for introducing a modification into the input signal (e_aug) by use of a modification signal (e_mod) based on the auxiliary boosting signal (e_boost_power), so as to generate an input signal that represents a non-zero, positive deviation of the output signal (MAP) from the reference signal (MAP_ref) as long as the auxiliary boosting device (12) is active
**characterized in that** the boosting device is a variable geometry turbocharger (11) and **in that** the boost pressure control signal (vnt_pos) is designed to influence the geometry of the variable geometry turbocharger (11).

2. Boost pressure control device according to claim 1, **characterized in that** the introduction unit is implemented as an adder (5) for adding the modification signal (e_mod) to a deviation signal (e_map) representing the deviation of the output signal (MAP) from the reference signal (MAP_ref), so as to generate a modified deviation signal (e_aug) as the input signal.

3. Boost pressure control device according to claim 1, **characterized in that** the introduction unit is implemented as an adder for adding the modification signal (e_mod) to the reference signal (MAP_ref), so as to generate a modified reference signal.

4. Boost pressure control device according to claim 1, **characterized in that** the introduction unit is implemented as a subtracter for subtracting the modification signal (e_mod) from the output signal (MAP), so as to generate a modified output or measured signal.

5. Boost pressure control device according to any of the preceding claims, **characterized in that** it comprises a look-up table (6) which provides a number of values for the modification signal, each value being based on a different value of the auxiliary boosting signal (e_boost_power).

6. Boost pressure control device according to any of the preceding claims, **characterized in that** it further comprises a timer (7) for delaying the Introduction of the modification signal (e_mod) by a certain time.

7. Combustion engine, in particular a diesel combustion engine, comprising a boosting device (11) and an auxiliary boosting device (12) **characterized in that** it is equipped with a boost pressure control device according to any of the preceding claims.

8. Method of controlling the boost pressure in a turbocharged combustion engine equipped with a boosting device responsive to an boost pressure control signal (vnt_pos) and an auxiliary boosting device responsive to an auxiliary boosting signal (e_boost_power), in which:
the boost pressure control signal (vnt_pos) is calculated in response to an input signal (e_aug) based on the deviation of an output signal (MAP) of the combustion engine (1) which represents a measure for the boost pressure in the combustion engine (1) from a reference signal (MAP_ref) which represents a setpoint to be reached by the output signal (MAP),
the deviation based on the auxiliary boosting signal (e_boost_power) is modified so as to derive, as the input signal, a modified deviation signal (e_aug) which represents a non-zero deviation as long as the auxiliary boosting device is active,
**characterized in that** the boosting device is a variable geometry turbocharger (11) and **in that** the boost pressure control signal (vnt_pos) is designed to influence the geometry of the variable geometry turbocharger (11).

9. Method according to claim 8, **characterized in that** the deviation is modified by adding a modification signal (e_mod) to a deviation signal (e_map) representing the deviation of the output signal (MAP) from the reference signal (MAP_ref).

10. Method according to claim 8, **characterized in that** the deviation is modified by adding a modification signal (e_mod) to the reference signal (MAP_ref).

11. Method according to claim 8, **characterized in that** the deviation signal is modified by subtracting a modification signal (e_mod) from the output signal (MAP_ref).

12. Method according to any of the claims 8 to 11, **characterized in that** a non-linear dependency of the modification signal (e_mod) on the auxiliary boosting signal (e_boost_power) is provided.

13. Method according to any of the claims 8 to 12, **characterized in** first calculating the boost pressure control signal (vnt_pos) based on the un-modified deviation before, after a certain time delay, calculating the boost pressure control signal (vnt_pos) based on the modified deviation.

## Patentansprüche

1. Ladedruckregeleinrichtung für einen Verbrennungsmotor (1), ausgestattet mit einer Verstärkungseinrichtung (11), die auf ein Ladedruckregelsignal (vnt pos) reagiert, und einer Hilfsverstärkungseinrichtung (12), die auf ein Hilfsverstärkungssignal (e_boost_power) reagiert, umfassend:
einen Controller (3) zum Regeln des Ladedrucks des Verbrennungsmotors (1) durch Ausgeben des Ladedruckregelsignals (vnt pos) an die Verstärkungseinrichtung (11) als Reaktion auf ein in den Controller eingegebenes Eingangssignal (e_aug), wobei das Eingangssignal auf einer Abweichung eines Ausgangssignals (MAP) des Verbrennungsmotors (1), das ein Maß für den Ladedruck in dem Verbrennungsmotor (1) darstellt, von einem Referenzsignal (MAP ref), das einen von dem Ausgangssignal (MAP) zu erreichenden Sollpunkt darstellt, basiert;
eine Einführungseinheit (5) zum Einführen einer Modifikation in das Eingangssignal (e_aug) durch Verwendung eines Modifikationssignals (e_mod) auf der Basis des Hilfsverstärkungssignals (e_boost_power), um ein Eingangssignal zu erzeugen, das eine von Null verschiedene positive Abweichung des Ausgangssignals (MAP) von dem Referenzsignal (MAP_ref) darstellt, solange die Hilfsverstärkungseinrichtung (12) aktiv ist,
**dadurch gekennzeichnet, daß** die Verstärkungseinrichtung ein Turbolader (11) mit variabler Geometrie ist und daß das Ladedruckregelsignal (vnt_pos) dafür ausgelegt ist, die Geometrie des Turboladers (11) mit variabler Geometrie zu beeinflussen.

2. Ladedruckregeleinrichtung nach Anspruch 1, **dadurch gekennzeichnet, daß** die Einführungseinheit als ein Addierer (5) implementiert ist zum Addieren des Modifikationssignals (e_mod) zu einem Abweichungssignal (e_map), das die Abweichung des Ausgangssignals (MAP) von dem Referenzsignal (MAP_ref) darstellt, um ein modifiziertes Abweichungssignal (e_aug) als das Eingangssignal zu erzeugen.

3. Ladedruckregeleinrichtung nach Anspruch 1, **dadurch gekennzeichnet, daß** die Einführungseinheit als ein Addierer implementiert ist zum Addieren des Modifikationssignals (e_mod) zu dem Referenzsignal (MAP_ref), um ein modifiziertes Referenzsignal zu erzeugen.

4. Ladedruckregeleinrichtung nach Anspruch 1, **dadurch gekennzeichnet, daß** die Einführungseinheit als ein Subtrahierer implementiert ist zum Subtrahieren des Modifikationssignals (e_mod) von dem Ausgangssignal (MAP), um ein modifiziertes Ausgangs- oder Meßsignal zu erzeugen.

5. Ladedruckregeleinrichtung nach einem der vorhergehenden Ansprüche, **dadurch gekennzeichnet, daß** sie eine Nachschlagetabelle (6) umfaßt, die eine Reihe von Werten für das Modifikationssignal liefert, wobei jeder Wert auf einem anderen Wert des Hilfsverstärkungssignals (e_boost_power) basiert.

6. Ladedruckregeleinrichtung nach einem der vorhergehenden Ansprüche, **dadurch gekennzeichnet, daß** sie weiterhin einen Zeitgeber (7) zum Verzögern der Einführung des Modifikationssignals (e_mod) um eine bestimmte Zeit umfaßt.

7. Verbrennungsmotor, insbesondere ein Dieselverbrennungsmotor, umfassend eine Verstärkungseinrichtung (11) und eine Hilfsverstärkungseinrichtung (12), **dadurch gekennzeichnet, daß** er mit einer Ladedruckregeleinrichtung nach einem der vorhergehenden Ansprüche ausgestattet ist.

8. Verfahren zum Regeln des Ladedrucks in einem turboaufgeladenen Verbrennungsmotor, der mit einer Verstärkungseinrichtung, die auf ein Ladedruckregelsignal (vnt_pos) reagiert, und einer Hilfsladeeinrichtung, die auf ein Hilfsverstärkungssignal (e_boost_power) reagiert, ausgestattet ist, bei dem:
das Ladedruckregelsignal (vnt_pos) berechnet wird als Reaktion auf ein Eingangssignal (e_aug) auf der Basis der Abweichung eines Ausgangssignals (MAP) des Verbrennungsmotors (1), das ein Maß für den Ladedruck in dem Verbrennungsmotor (1) darstellt, von einem Referenzsignal (MAP_ref), das einen von dem Ausgangssignal (MAP) zu erreichenden Sollwert darstellt,
die auf dem Hilfsverstärkungssignal (e_boost_power) basierende Abweichung so modifiziert wird, daß als das Eingangssignal ein modifiziertes Abweichungssignal (e_aug) abgeleitet wird, das eine von Null verschiedene Abweichung darstellt, solange die Hilfsverstärkungseinrichtung aktiv ist,
**dadurch gekennzeichnet, daß** die Verstärkungseinrichtung ein Turbolader (11) mit variabler Geometrie ist und daß das Ladedruckregelsignal (vnt_pos) dafür ausgelegt ist, die Geometrie des Turboladers (11) mit variabler Geometrie zu beeinflussen.

9. Verfahren nach Anspruch 8, **dadurch gekennzeichnet, daß** die Abweichung modifiziert wird durch Addieren eines Modifikationssignals (e_mod) zu einem Abweichungssignal (e_map), das die Abweichung des Ausgangssignals (MAP) von dem Referenzsignal (MAP_ref) darstellt.

10. Verfahren nach Anspruch 8, **dadurch gekennzeichnet, daß** die Abweichung modifiziert wird durch Addieren eines Modifikationssignals (e_mod) zu dem Referenzsignal (MAP_ref).

11. Verfahren nach Anspruch 8, **dadurch gekennzeichnet, daß** das Abweichungssignal modifiziert wird durch Subtrahieren eines Modifikationssignals (e_mod) von dem Ausgangssignal (MAP ref).

12. Verfahren nach einem der Ansprüche 8 bis 11, **dadurch gekennzeichnet, daß** eine nichtlineare Abhängigkeit des Modifikationssignals (e_mod) von dem Hilfsverstärkungssignal (e_boost_power) vorgesehen wird.

13. Verfahren nach einem der Ansprüche 8 bis 12, **gekennzeichnet durch** das erste Berechnen des Ladedruckregelsignals (vnt_pos) auf der Basis der unmodifizierten Abweichung, bevor nach einer bestimmten Zeitverzögerung das Ladedruckregelsignal (vnt_pos) auf der Basis der modifizierten Abweichung berechnet wird.

## Revendications

1. Dispositif de commande de la pression de suralimentation d'un moteur à combustion (1) équipé d'un dispositif de suralimentation (11) réagissant à un signal de commande de pression de suralimentation (vnt_pos) et d'un dispositif de suralimentation auxiliaire (12) réagissant à un signal de suralimentation auxiliaire (e_boost_power) comprenant :
un contrôleur (3) pour commander la pression de suralimentation du moteur à combustion (1) en délivrant le signal de commande de pression de suralimentation (vnt_pos) au dispositif de suralimentation (11) en réaction à un signal d'entrée (e_aug) entré dans le contrôleur, le signal d'entrée se basant sur un écart d'un signal de sortie (MAP) du moteur à combustion (1) représentant une mesure de la pression de suralimentation dans le moteur à combustion (1) par rapport à un signal de référence (MAP_ref) représentant un point de consigne à atteindre par le signal de sortie (MAP) ;
une unité d'introduction (5) pour introduire une modification dans le signal de sortie (e_aug) en utilisant un signal de modification (e_mod) en se basant sur le signal de suralimentation auxiliaire (e_boost_power) de manière à générer un signal d'entrée qui représente un écart positif différent de zéro du signal de sortie (MAP) par rapport au signal de référence (MAP_ref) tant le dispositif de suralimentation auxiliaire (12) est actif,
**caractérisé en ce que** le dispositif de suralimentation est un turbocompresseur à géométrie variable (11) et **en ce que** le signal de commande de pression de suralimentation (vnt_pos) est conçu pour influencer la géométrie du turbocompresseur à géométrie variable (11).

2. Dispositif de commande de la pression de suralimentation selon la revendication 1, **caractérisé en ce que** l'unité d'introduction est mise en oeuvre sous la forme d'un additionneur (5) pour ajouter le signal de modification (e_mod) à un signal d'écart (e_map) représentant l'écart du signal de sortie (MAP) par rapport au signal de référence (MAP_ref) de manière à générer un signal d'écart modifié (e_aug) en tant que signal d'entrée.

3. Dispositif de commande de la pression de suralimentation selon la revendication 1, **caractérisé en ce que** l'unité d'introduction est mise en oeuvre sous la forme d'un additionneur pour ajouter le signal de modification (e_mod) au signal de référence (MAP_ref) de manière à générer un signal de référence modifié.

4. Dispositif de commande de la pression de suralimentation selon la revendication 1, **caractérisé en ce que** l'unité d'introduction est mise en oeuvre sous la forme d'un soustracteur pour soustraire le signal de modification (e_mod) du signal de sortie (MAP) de manière à générer une sortie modifiée ou signal mesuré.

5. Dispositif de commande de la pression de suralimentation selon l'une quelconque des revendications précédentes, **caractérisé en ce qu'**il comprend un tableau de correspondance (6) qui fournit un certain nombre de valeurs pour le signal de modification, chaque valeur se basant sur une valeur différente du signal de suralimentation auxiliaire (e_boost_power).

6. Dispositif de commande de la pression de suralimentation selon l'une quelconque des revendications précédentes, **caractérisé en ce qu'**il comprend en plus un temporisateur (7) pour retarder l'introduction du signal de modification (e_mod) d'un certain temps.

7. Moteur à combustion, notamment moteur à combustion diesel, comprenant un dispositif de suralimentation (11) et un dispositif de suralimentation auxiliaire (12), **caractérisé en ce qu'**il est équipé d'un dispositif de commande de la pression de suralimentation selon l'une quelconque des revendications précédentes.

8. Procédé de commande de la pression de suralimentation dans un moteur à combustion à turbocompresseur équipé d'un dispositif e suralimentation réagissant à un signal de commande de pression de suralimentation (vnt_pos) et d'un dispositif de suralimentation auxiliaire réagissant à un signal de suralimentation auxiliaire (e_boost_power), dans lequel :
le signal de commande de pression de suralimentation (vnt_pos) est calculé en réaction à un signal d'entrée (e_aug) se basant sur un écart d'un signal de sortie (MAP) du moteur à combustion (1) qui représente une mesure de la pression de suralimentation dans le moteur à combustion (1) par rapport à un signal de référence (MAP_ref) qui représente un point de consigne à atteindre par le signal de sortie (MAP) ;
l'écart basé sur le signal de suralimentation auxiliaire (e_boost_power) est modifié de manière à dériver, comme signal d'entrée, un signal d'écart modifié (e_aug) qui représente un écart différent de zéro tant le dispositif de suralimentation auxiliaire est actif,
**caractérisé en ce que** le dispositif de suralimentation est un turbocompresseur à géométrie variable (11) et **en ce que** le signal de commande de pression de suralimentation (vnt_pos) est conçu pour influencer la géométrie du turbocompresseur à géométrie variable (11).

9. Procédé selon la revendication 8, **caractérisé en ce que** l'écart est modifié en ajoutant un signal de modification (e_mod) à un signal d'écart (e_map) représentant l'écart du signal de sortie (MAP) par rapport au signal de référence (MAP_ref).

10. Procédé selon la revendication 8, **caractérisé en ce que** l'écart est modifié en ajoutant un signal de modification (e_mod) au signal de référence (MAP_ref).

11. Procédé selon la revendication 8, **caractérisé en ce que** l'écart est modifié en soustrayant un signal de modification (e_mod) du signal de référence (MAP_ref).

12. Procédé selon l'une quelconque des revendications 8 à 11, **caractérisé en ce qu'**il est prévu une dépendance non linaire du signal de modification (e_mod) au signal de suralimentation auxiliaire (e_boost_power).

13. Procédé selon l'une quelconque des revendications 8 à 12, **caractérisé en** calculant tout d'abord le signal de commande de pression de suralimentation (vnt_pos) en se basant sur l'écart non modifié avant, après un certain retard, en calculant le signal de commande de pression de suralimentation (vnt_pos) en se basant sur l'écart modifié.
